# EUROPÄISCHE PATENTSCHRIFT

(11) **EP 0 478 982 B1**
(45) Veröffentlichungstag und Bekanntmachung des Hinweises auf die Patenterteilung: **05.03.1997**
(21) Anmeldenummer: 91115137.1
(22) Anmeldetag: 06.09.1991
(51) Int. Cl.: A01D 90/00, B60P 1/16

(54) **Fahrbarer Sammelbehälter für Mäh- und/oder Kehrgut oder dergleichen**
Mobile collecting container for crop and/or sweepings and the like
Récipient collecteur mobile pour les récoltes et/ou les balayures, et les matières similaires

(30) Priorität: 06.09.1990 DE 4028331
(43) Veröffentlichungstag der Anmeldung: 08.04.1992
(73) Patentinhaber: WIEDENMANN GMBH, D-89192 Rammingen (DE)
(72) Erfinder:
(74) Vertreter: Flügel, Otto, Dipl.-Ing.

(56) Entgegenhaltungen:
- EP-A- 0 221 478
- DE-A- 2 264 548
- US-A- 4 787 197

## Beschreibung

Bekannte Mäh- oder Kehrgutsammelbehälter in der Bauweise als einachsige Anhänger, d.h. hier mit zwei um senkrecht zur Fahrebene verschwenkbar an einem Chassisrahmen gehaltenen Rädern, deren Rotationsachsen bei Geradeausfahrt zueinander fluchtend ausgerichtet sind, halten im Betriebszustand einen verhältnismäßig großen Abstand zum Zugfahrzeug, was hinsichtlich des Platzbedarfes generell und hinsichtlich der Kurvenfahrtverhältnisse im besonderen um so unangenehmer ist, als die Hinterräder des \Zugfahrzeuges klein sind und damit ungenutzter Raum zur Verfügung steht. Solche Mäh- oder Kehrgutsammelbehälter bekannter Bauart hat man dadurch einer Hochentleerung zugeführt - Aufhäufen von aufgenommenen Gut bzw. Übergabe an einen Ladewagen oder dergleichen - daß man den an zwei parallelen Lenkerpaaren gegenüber einem Chassisrahmen gehaltenen Behälter mit Hilfe von zwei Hydraulikzylindern, die beidseits an diesem Behälter angegreifen, gehoben und gesenkt hat. Dazu war ein entsprechend großvolumig ausgebildeter Rahmen erforderlich, an dem sich die beiden Hydraulikzylinder abstützen konnten. Dieser schwere Chassisrahmen beherbergt auch den seitlich angeordneten Sauger (Sauggebläse), dessen Eingang an einen Schlauch angeschlossen ist, der seitlich des Zugfahrzeugs zu einem Kehrgerät, Mähgerät oder dergleichen - in Front- oder Zwischenachsanordnung - geführt ist.

Aus der US Patentschrift 4,487,007 ist bereits ein Gerät bekannt, daß von der Hubmechanik her zwar einen mittig angeordneten hydraulischen Hubzylinder aufweist, jedoch auf ein Hebel- und Teleskopgestänge arbeitet. Dabei wird bei ausfahrendem Kolben des Hubzylinders ein Querholm bewegt, wodurch eine Art Teleskopgestänge zur Anhebung des Sammelbehälters ausgefahren wird. Weitere Gestänge dienen der Behälteröffnung in der Hochentleerungslage. Damit ist dieses Gerät hinsichtlich der Sammelbehälterführung anders ausgebildet und vermeidet insbesondere nicht die Abstützung an einem entsprechend breit ausgebildeten Chassisrahmen.

Der Erfindung liegt die Aufgabe zugrunde, einen solchen, als einachsiger Anhänger ausgebildeten Sammelbehälter möglichst, kompakt und leicht sowie dem Zugfahrzeug nahe angeordnet auszugestalten.

Zu diesem Zwecke zeichnet sich ein gemäß einer bevorzugten Ausführungsform der Erfindung ausgebildeter Anhanger-Sammelbehälter zunächst dadurch aus, daß der für ein Heben und Senken des Sammelbehälters für dessen wahlweise Hochentleerung mit einem hinsichtlich der Fahrzeugbreite mittig angeordneten Hydraulikzylinder versehen ist, der vom Chassisrahmen aus zum Sammelbehälter hin gesehen an einer etwa mittig in Längsachse des Sammelbehälters verlaufenden Strebe angreift. Diese Strebe bildet mit seitlich des Behälters angreifenden Führungsstangen, die ein oberes Lenkerpaar bilden, ein Parallelogramm. Die Querstabilität der Sammelbehälterführung wird durch dieses im oberen Bereich dieser Parallelführung angeordnetes Lenkerpaar sichergestellt, welches lediglich der Führung dient und insoweit keine Kräfte überträgt. Der die Hochentleerung ermöglichende, mittig angeordnete Hubzylinder ist seinerseits an einem chassisfesten Rahmenteil abgestützt, das sich - in bevorzugter Ausführung aus zwei verhältnismäßig nah beabstandeten etwa vertikal gerichteten Streben gebildet - auf den Längsmittelbereich des Anhängers beschränkt. Aus der Fahrtrichtung gesehen, bildet somit der Chassisrahmen etwa ein T, dessen Querbalken radseitig angeordnet ist und sich seitlich des aufstrebenden, auf die Längsmitte des Anhängers beschränkten Strebenteil erstreckt und der Halterung des oberen Führungslenkerpaares sowie des Fahrgestelles dient.

Es ist ohne weiters verständlich, daß bei dieser Chassisrahmenkonstruktion gegenüber den bisherigen Vorstellungen wesentlich leichtere Bauweisen erzielt werden können.

Die dem Zugfahrzeug zugewandte untere Stirnfläche des Sammelbehälters ist bei Aufnahme des Mäh- oder Kehrgutes vorzugsweise schräg zur Ebene des zu bearbeitenden Bodens verlaufend ausgebildet, wodurch ein Raum außerhalb des Behälterinneren entsteht, in welchem vorzugsweise der Gebläseantrieb vorgesehen ist. Dadurch wird der Raum zwischen dem Zapfwellenanschluß des Zugfahrzeugs und der benachbarten Stirnseite des Anhänger-Sammelbehälters verhältnismäßig klein. In diesen Raum ist vorzugsweise zumindest ein Teil eines Gebläses und dessen Antriebes hineinverlegt, wobei der Ausgang des Gebläses an die schräge Wandausbildung des anzuschließenden Sammelbehälters angepaßt ausgebildet ist. In bevorzugter Ausführung ist zumindest der Antrieb des Gebläses in den durch die schräge Wandausbildung des Sammelbehälters - also unterhalb dieser Wandausbildung - hineinverlegt, und zwar bevorzugt in Ausbildung als Keilriementrieb zwischen dem Zapfwellenanschluß und der Gebläserad-Antriebswelle. Das Gebläse bzw. dessen Antriebsteil befindet sich vorzugsweise innerhalb einer mit verhältnismäßig breit ausgeführtem Mittelbereich ausgestatteten U-Schiene, die sich etwa horizontal und senkrecht zur Geradeausfahrtrichtung des Anhängers erstreckt. Diese Schiene ist derart ausgestaltet, daß sie wahlweise einen Rechts- oder Links-Anbau des Getriebes bzw. Gebläses zuläßt.

Durch die bevorzugte Verlagerung des Keilriemenantriebes in den Raum unter die schräg verlaufende, dem Zugfahrzeug zugewandte Stirnseite des Sammelbehälters wird die Zapfwellenverbindung für den Antrieb des Getriebes weit in Richtung des Anhänger-Sammelbehälter verschoben, so daß die gesamte Länge des Gespannes entsprechend gering gehalten werden kann.

Der Chassisrahmen, der - wie bereits ausgeführt - eine stabile Mittelstrebe (insbesondere eng beabstandete Doppelstrebe) vorzugsweise aufweist, die den chassisseitigen Fußpunkt des hydraulischen Hubzylinders aufnimmt, von dem sich der Rahmen seitlich aufspreizend ausgebildet ist, der die Laufräder trägt, läßt sich vorzugsweise mit Hilfe von zusätzlichen Stützrädern als selbstständig stehendes Gerät ausbilden. Für eine einfache Ankupplung sind zur Vorderseite hin, also auf das Zugfahrzeug zu gerichtet, zwei hakenförmige Endbereiche an dem Rahmen vorzugsweise vorgesehen, die zum Boden hin geöffnet sind und in welche eine Stange eingreift, die zwischen den beiden unteren Parallellenkern der Dreipunktanhängung des Zugfahrzeuges vorgesehen ist. Damit läßt sich der Anhänger-Sammelbehälter besonders einfach an das Zugfahrzeug anhängen, indem dessen unteres Parallelenkerpaar nach entsprechendem Heranfahren an den Anhänger angehoben wird und in die Ösen der hakenförmigen Enden eingreift. Danach wird - ggfs. auch selbsttätig - eine Zapfwellenverbindung hergestellt und der obere Lenker des Dreipunktgestänges mit dem Anhänger verbunden Da die Dreipunktaufhängung höhennachgiebig einstellbar ist, bleibt der Anhänger-Sammelbehälter auf seinen Laufrädern abgestützt.

Wie die Zeichnungen erkennen lassen, sind gemäß einer bevorzugten Ausführungsform die nach unten mündenden Öffnungen der hakenförmigen Einhängausbildungen des Chassisrahmens des Anhängers nach Einführen der quer zur Fahrtrichtung verlaufenden Verbindungsstange zwischen den unteren Lenkern des Zugfahrzeuges verschließbar, vorzugsweise mit Hilfe einer federbelasteten Riegeleinrichtung, so daß eine Ausklinkung der einmal hergestellten Verbindung zwischen Anhänger und Zugfahrzeug unbeabsichtigt nicht erfolgen kann.

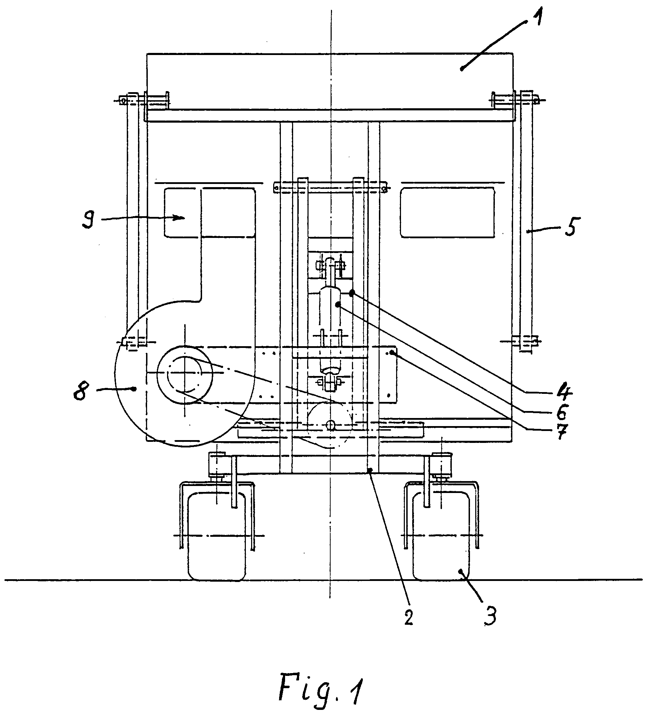

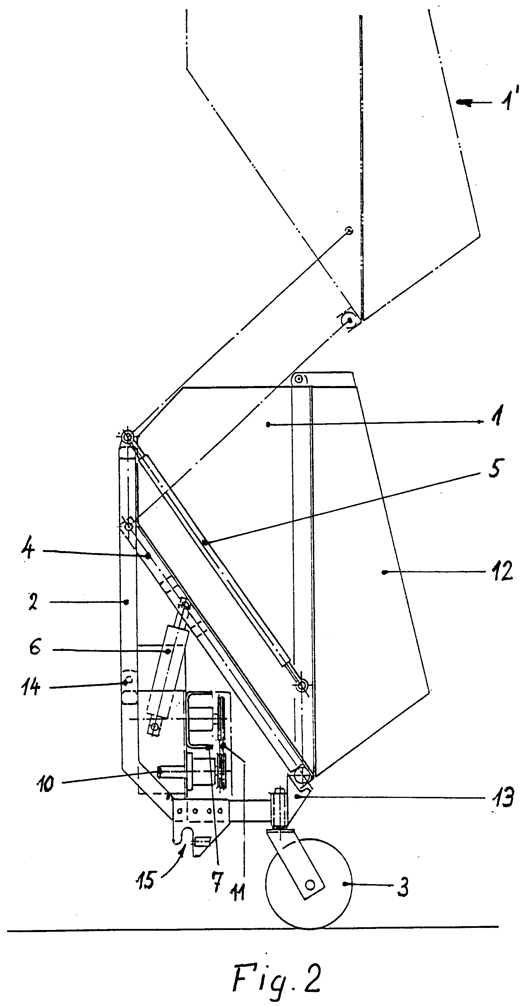

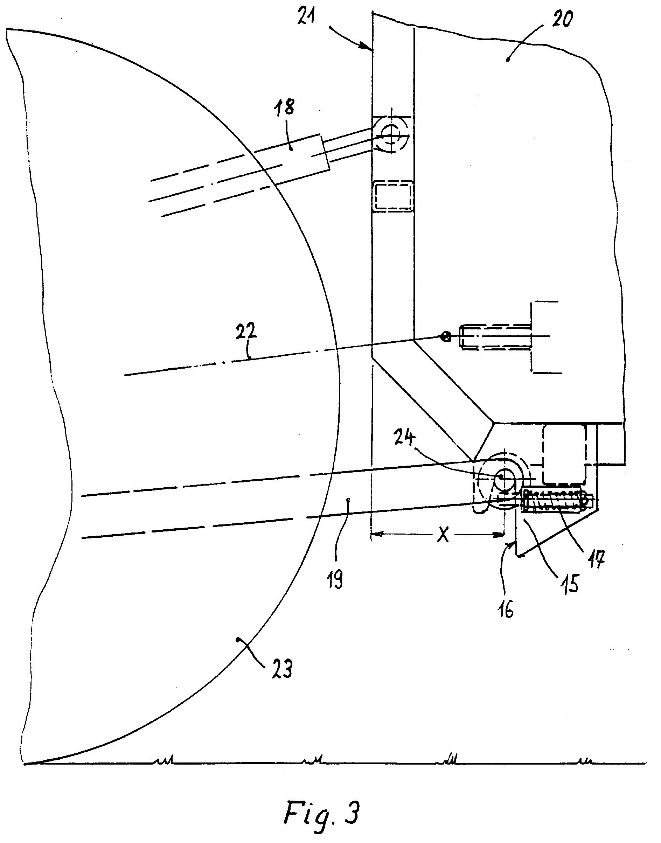

Dabei ist von besonderer Bedeutung, daß der Eingriff zwischen den hakenförmigen Anhängeelementen und der zwischen den Parallellenkern des Zugfahrzeuges verlaufenden Stange in Fahrtrichtung verstellbar ist. Dies geschieht insbesondere durch eine entsprechende, insbesondere stufenweise vorgesehene Anbringung der hakenförmigen Elemente an dem Chassisrahmen des Anhängers. Dies zeigt vor allem Figur 2 des Ausführungsbeispieles in Form einer Reihe von in Fahrtrichtung hintereinander angeordneten Verbindungsöffnungen zwischen den Fanghaken und dem etwa horizontal verlaufenden unteren Abschnitt des Chassisrahmens.

Die bei dem einachsigen Anhänger im Betrieb wirksamen Laufräder lassen sich hinsichtlich ihrer Verschwenkausrichtung um ihre vertikale Verschwenklagerung vorzugsweise feststellen, wodurch zum einen eine starre Laufeigenschaft bei schwierigem Gelände, beispielsweise Steilhängen, erreicht wird und wodurch zum anderen eine stabilere Handhabung des Anhänger-Sammelbehälters nach Abkupplung von dem Zugfahrzeug erreicht wird. Der Anhänger-Sammelbehälter ist nämlich in bevorzugter Ausführung mit vorderen Stützrädern versehen, die nach Abkupplung von dem Zugfahrzeug nach unten bewegt in eine Raststellung gelangen, so daß der Anhänger auf zumindest drei, vorzugsweise vier Rädern abgestützt ist. Dabei sind die Vorderräder bevorzugt nicht verschwenkbar und die eigentlichen Tragräder des Anhängers hinsichtlich ihrer Verschwenkstellung mittels eines Bolzens blockiert, so daß der leere, abgestellte Behälter mühelos und zugleich ohne ein irgendwie geartetes seitliches Wegrollen bewegt und gesichert abgestellt werden kann.

Der erfindungsgemäß nur noch einzige vorgesehene Hydraulikzylinder für das Anheben des Sammelbehälters gegenüber den Chassisrahmen in die Hochentleerungslage erlaubt ein einfaches Umrüsten zwischen einer Ausführung mit und einer solchen ohne Hochentleerungsmöglichkeit.

Die schleppend nachfolgenden Laufräder des Sammelbehälters sind mit Hilfe von Bolzen vorzugsweise so ausgerichtet festzulegen, daß sie in Fahrtrichtung nach hinten gesehen ihre weiteste Ausschwenklage einnehmen. Nach Verstellen der vorderen Stutzräder nach unten erhält man somit eine statisch günstige Abstützung des Behälters im abgekuppelten Zustand.

Die Konstruktion des Chassisrahmens mit nur einer auf den Längsmittelbereich beschränkten, etwa vertikal aufstrebenden Rahmenstützen, die Anordnung nur eines Hubzylinders bei gleichzeitiger Seitenführung des Sammelbehälters gegenüber dem Chassisrahmen mittels einem entsprechend schwach auszubildendem Lenkerpaar und die Verkürzung des Anhängers in Fahrtrichtung ermöglichen zunächst eine leichtgewichtigere Ausführung des Anhänger-Sammelbehälters. Die damit verbundene Kompaktheit dieses Anhängers erspart Platz und ermöglicht eine bessere Manövrierfärhigkeit des Gespannes aus Zugmaschine und Anhänger. Von besonderem Gewicht ist zusätzlich die Tatsache, daß bei der beschriebenen Ausgestaltung des Anhängers die Verbindung mit dem Dreipunktgestänge des Zugfahrzeugs weiter auf die Laufradachse des Anhängers zu verschoben wird, d.h. dessen Schwerpunkt auf die Zugmaschine hin verlegt wird Die Ausgestaltung der Zugmaschine je nach Ausführung mit unterschiedlich großen Hinterrädern und damit weit nach hinten vorragender Anhängerausbildung des Dreipunktgestänges für die Verbindung zum Anhänger verursacht bei herkömmlicher Ausgestaltung der Anhänger-Sammelbehälter viel Platzbedarf in Fahrtrichtung, d.h. einen ungenutzt großen Raum zwischen Zugfahrzeug und Sammelbehälter, was durch eine bevorzugte Ausführungsform der Erfindung vermieden wird. Die besonders bevorzugte Verstellbarkeit der hakenförmigen Verbindungen zwischen Rahmenchassis und querlaufender Stange zwischen den Unterlenkern der Zugmaschine gestattet es, unterschiedliche Zugfahrzeugausbildungen (Hinterradgröße) auszugleichen und damit anpaßbar zu sein.

### BEZUGSZEICHENLISTE

- 1.: Behälter
- 1'.: Behälter "ausgehoben"
- 2.: Rahmen
- 3.: Nachlaufrad
- 4.: unterer Lenker (zentral mittig unter dem Behälter)
- 5.: obere Lenker (seitlich außen neben dem Behälter)
- 6.: Hubzylinder (mittig)
- 7.: Verstellschiene (für Gebläse)
- 8.: Gebläse (seitlich)
- 9.: Einblasöffnung vom Gebläse in Behälter mit "Abdichtung" (links oder rechts)
- 10.: Zapfwellenanschluß
- 11.: Keilriemenantrieb
- 12.: Falle
- 13.: Behälterauflage
- 14.: Oberlenkeranschluß
- 15.: Aufnahmehaken bzw. Fanghaken
- 16.: Anschlagfläche
- 17.: Verriegelung
- 18.: Oberlenker
- 19.: Unterlenker
- 20.: Anbaugerät (Kompaktsauger)
- 21.: Vorderkante "Anbaugerät"
- 22.: Zapfwelle
- 23.: Schlepperrad
- 24.: an den Unterlenkern montierte, durchgehende Stange mit seitlichen Anschlagscheiben zum "Einfahren" Von unten in die Fanghaken
- x.: Um das Maß x zurückgesetzter Unterlenkeranschluß im Anbaugerät

## Patentansprüche

1. Einachsiger Anhänger mit wenigstens einem, um eine senkrecht zur Fahrebene gerichtete Achse verschwenkbar an einem Chassisrahmen (2) gehaltenen Nachlaufrad (3), und mit einem Behälter (1), der zum Zwecke der Hochentleerung über zwei etwa parallele Lenkeranordnungen (4, 5) gegenüber dem Chassisrahmen (2) gehalten und mittels einer Kolben-Zylindereinrichutng heb- und senkbar ist,
**dadurch gekennzeichnet**,
daß die Lenkeranordnungen (4, 5) aus einer unteren Lenkereinrichtung (4) und einem oberen Lenkerpaar (5) besteht, daß die Kolben- Zylindereinrichtung mit einem hinsichtlich der Anhängerbreite mittig angeordneten Hubzylinder (6) versehen ist, der einen Endes an dem Chassisrahmen (2) abgestützt und anderen Endes an der unteren Lenkereinrichtung angreift, wobei die untere Lenkereinrichtung mit dem oberen Lenkerpaar (5) etwa ein Parallelogramm bildet und die untere Lenkereinrichtung (4) einerseits an einem auf den breiten Mittelbereich des Anhängers beschränkten Chassisrahmenbereich des Chassisrahmens und andererseits an dem Behälter (1) angelenkt ist.

2. Einachsiger Anhänger nach Anspruch 1,
**dadurch gekennzeichnet**,
daß die Lenker (5) des oberen Lenkerpaares in den beiden Seitenbereichen des Behälters (1) angeordnet und an einer quer zur Fahrtrichtung verlaufenden Strebe des auf den breiten Mittelbereich des Anhängers beschränkten Chassisrahmenbereich angelenkt sind.

3. Einachsiger Anhänger nach Anspruch 1 oder 2,
**dadurch gekennzeichnet**,
daß die dem Zugfahrzeug zugewandte untere Stirnfläche des Behälters (1) zumindest im unteren Bereich schräg zur Ebene des Bodens verlaufend ausgebildet ist, so daß ein Raum außerhalb des Behälterinneren entsteht, in welchem vorzugsweise ein Gebläseantrieb (11) angeordnet ist.

4. Einachsiger Anhänger nach einem der Ansprüche 1 bis 3,
**dadurch gekennzeichnet**,
daß der Rahmen (2) zwei auf das Zugfahrzeug hin gerichtet abstrebende Fortsätze aufweist, die in hakenförmigen Endbereichen (15) auslaufen, welche zum Boden hin geöffnet sind und in welche eine zwischen den beiden unteren Parallellenkern (19) einer Dreipunktanhängung des Zugfahrzeuges vorgesehene Stange (24) eingreifen kann, welche Öffnungen vorzugsweise nach Aufnahme der Stange (24) gegen deren Ausgleichen verschließbar (17) sind, wobei Anschluß (14) für wenigstens einen höhennachgiebig einstellbaren Oberlenker (18) der Dreipunktaufhängung vorgesehen ist.

5. Einachsiger Anhänger nach Anspruch 4,
**dadurch gekennzeichnet**,
daß eine Zapfwellenkupplung vorgesehen ist, die bei Einhängen der Öffnungen der Rahmenfortsätze (15) in die Stange (24) der Dreipunktaufhängung und Herstellen der Oberlenkerverbindung selbsttätig in den Einkupplungszustand überführt wird.

6. Einachsiger Anhänger nach Anspruch 4 oder 5,
**dadurch gekennzeichnet**,
daß die hakenförmigen Öffnungen (15) gegenüber der zwischen den Parallellenkern (19) der Dreipunktaufhängung des Zugfahrzeugs verlaufenden Stange (24) in Fahrtrichtung verstellbar sind.

7. Einachsiger Anhänger nach einem der Ansprüche 4 bis 6,
**dadurch gekennzeichnet**,
daß die hakenförmigen Öffnungen (15) weiter zu den Nachlaufrädern (3) hin verschoben angeordnet sind als der Oberlenkeranschluß (14).

8. Einachsiger Anhänger nach einem der Ansprüche 1 bis 7,
**dadurch gekennzeichnet**,
daß die Nachlaufräder (3) hinsichtlich ihrer Verschwenkbarkeit um die horizontalen Achsen festlegbar sind und der Anhänger zusätzliche, für das Abstellen vorgesehene Stützräder aufweist.

9. Einachsiger Anhänger nach einem der Ansprüche 1 bis 8,
**dadurch gekennzeichnet**,
daß der Chassisrahmen (2) eine etwa vertikale Mittelstrebe -, insbesondere verhältnismäßig nah beabstandete Doppelstrebe - aufweist.

10. Einachsiger Anhänger nach Anspruch 3,
**dadurch gekennzeichnet**,
daß ein an den Gebläseantrieb (11) angeschlossenes Sauggebläse (8) an einer sich etwa horizontal und senkrecht zur Geradeausfahrtrichtung des Anhängers erstreckenden Schiene (7) gehalten ist.

11. Einachsiger Anhänger nach Anspruch 10,
**dadurch gekennzeichnet**,
daß die Schiene (7) für die Halterung des Sauggebläses (8) U-förmig ausgebildet ist, in der sich der Antriebsteil des Sauggebläses (8) befindet und die insbesondere wahlweise einen Rechts- oder Links-Anbau des Sauggebläses (8) zuläßt.

12. Einachsiger Anhänger nach Anspruch 9,
**dadurch gekennzeichnet**,
daß der Chassisrahmen in Fahrtrichtung gesehen etwa ein T bildet, dessen Querbalken radseitig angeordnet ist und sich seitlich der aufstrebenden Mittelstrebe erstreckt und der Halterung des oberen Führungslenkerpaares sowie des Fahrgestelles dient.

## Claims

1. A single-axle trailer comprising at least one trailing wheel supported on a chassis frame (2) so as to be pivotable about an axle directed vertically to the traveling plane, and a container (1) which is supported relative to the said chassis frame (2) by means of two approximately parallel connecting rod assemblies (4, 5) and can be raised and lowered by means of a piston-cylinder arrangement, for the purpose of overhead discharging, *characterized in* that the connecting rod assemblies (4, 5) are comprised of a lower connecting rod device (4) and an upper pair of connecting rods (5), that the piston-cylinder arrangement is provided with a lift cylinder (6) arranged centrally with respect to the trailer width, said lift cylinder being supported by one end thereof on the chassis frame (2) and engaging by the other end thereof at the lower connecting rod device, the lower connecting rod device together with said upper pair of rods (5) forming approximately a parallelogram, and said lower connecting rod device (4) being coupled to a portion of the chassis frame limited to the broad central portion of the trailer on one hand and to the container (1) on the other hand.

2. A single-axle trailer according to claim 1, *characterized in* that the connecting rods (5) of the upper pair of connecting rods are disposed in the two side portions of the container (1) and are coupled to a strut of said chassis frame portion which is limited to the central portion of the trailer, said strut extending transversely of the travelling direction.

3. A single-axle trailer according to claim 1, *characterized in* that the lower face of the container (1) facing the towing vehicle is formed to be sloping relative to the ground at least in the lower portion thereof so that outside the interior of the container a space is produced having arranged therein preferably a blower drive unit (1).

4. A single-axle trailer according to any one of the claims 1 to 3, *characterized in* that the frame (2) comprises two appendices directed so as to protrude toward the towing vehicle and terminating in hook-shaped end portions (15) which are open toward the bottom and are adapted to be engaged by a rod (24) provided between the two lower parallel connecting rods (19) of a three-point linkage of the towing vehicle, said openings being adapted to be closed (17) against releasing said rod (24), preferably after the rod has been received therein, an attachment (14) for at least one upper connecting rod (18) of the three-point linkage being provided, said upper connecting rod (18) being adjustable in a fashion to be yielding in its height.

5. A single-axle trailer according to claim 4, *characterized in* that a clutch for a power take-off shaft is provided which is automatically transferred to the coupled state when the openings of the frame appendices (15) are engaged in the rod (24) of the three-point linkage and when the connection of the upper connecting rods is established.

6. A single-axle trailer according to claim 4 or 5, *characterized in* that the hook-shaped openings (15) are adjustable in the travelling direction relative to the rod (24) extending between the parallel connecting rods (19) of the three-point linkage of the towing vehicle.

7. A single-axle trailer according to any one of the claims 4 to 6, *characterized in* that the hook-shaped openings (15) are arranged so as to be shifted farther to the trailing wheels (3) than the upper connecting rod attachment (14).

8. A single-axle trailer according to any one of the claims 1 to 7, *characterized in* that the trailing wheels (3) can be fixed as regards pivoting thereof about the horizontal axes, and that the trailer has additional supporting wheels for trailer storage.

9. A single-axle trailer according to any one of the claims 1 to 8, *characterized in* that the connecting rods (4, 5) are coupled to an uprising central strut of the chassis frame (2) limited to a central portion of the trailer width on one hand and to the collecting container (1) on the other hand.

10. A single-axle trailer according to any one of the claims 3 to 9, *characterized in* that a suction blower (8) connected to the blower drive unit (11) is supported on a rail (7) extending approximately horizontally and vertically to the straight travelling direction of the trailer.

11. A single-axle trailer according to claim 8, *characterized in* that said rail (7) for supporting said suction blower (8) is U-shaped with a relatively wide central portion, in which rail the driving part of the suction blower (8) is located and which particularly allows selective mounting of the suction blower (8) either on the right or on the left.

12. A single-axle trailer according to any one of the claims 9 to 11, *characterized in* that the chassis frame approximately forms a T, seen in the traveling direction, the cross-beam of said T being arranged on the wheel side and extending laterally of the uprising central portion.

## Revendications

1. Remorque à un essieu comportant au moins une roue tirée (3), pivotante autour d'un axe perpendiculaire au plan de déplacement, et portée par un cadre de châssis (2), ainsi cu'un récipient (1) qui, pour être vidé en position haute, est relié par deux dispositifs à bras sensiblement parallèles (4, 5) par rapport au cadre du châssis (2) et se relève et se baisse à l'aide d'un vérin,
caractérisée en ce que
le dispositif à bras (4, 5) se compose d'un dispositif à bras inférieur (4) et d'un dispositif à bras de guidage inférieur (4) et d'un dispositif de bras de guidage supérieur (5), l'installation à vérin comportant un vérin de levage (6) monté au milieu dans le sens de la largeur de la remorque, et dont une extrémité s'appuie contre le cadre (2) du châssis et l'autre extrémité attaque l'installation de bras inférieur, cette installation de bras inférieur formant, avec la paire de bras supérieurs (5), sensiblement un parallélogramme et l'installation de bras inférieur (4) est articulée d'un côté à une zone du cadre du châssis limitée à la zone médiane large de la remorque pour le cadre du châssis et est articulée par son autre extrémité au récipient (1).

2. Remorque à un essieu selon la revendication 1,
caractérisée en ce que
les bras (5) de la paire supérieure sont montés dans les deux zones latérales du récipient (1) et sont articulés sur une entretoise transversale à la direction de déplacement de la zone du cadre de châssis limitée à la zone médiane large de la remorque.

3. Remorque à un essieu selon les revendications 1 ou 2,
caractérisée en ce que
la face frontale inférieure du récipient (1), tournée vers le tracteur, est au moins inclinée dans sa zone inférieure, par rapport au plan du sol, pour former un volume à l'extérieur du récipient qui reçoit de préférence le moyen d'entraînement de ventilateur (11).

4. Remorque à un essieu selon l'une des revendications 1 à 3,
caractérisée en ce que
le cadre (2) comporte deux prolongements en saillie par rapport au tracteur en se terminant dans leur zone d'extrémité (15) par des formes de crochets ouverts en direction du sol et pouvant recevoir une barre (24) prévue entre les deux moyens d'accrochage parallèles inférieurs (19) d'un attelage en trois points du tracteur, ces ouvertures, de préférence après réception de la barre (24), se fermant par rapport à des moyens d'équilibrage (17), et la fermeture (14), pour au moins un bras supérieur (18), est prévue réglable de manière quelconque en hauteur de l'attelage en trois points.

5. Remorque à un essieu selon la revendication 4,
caractérisée par
un attelage de prise de force qui, lors de l'accrochage des ouvertures des prolongements de châssis (15) dans la barre (14) de la suspension en trois points et réalisation de la liaison du bras supérieur, s'effectue automatiquement pour passer en position d'accouplement.

6. Remorque à un essieu selon les revendications 4 ou 5,
caractérisée en ce que
les ouvertures (15) en forme de crochets sont réglables dans la direction de déplacement, par rapport à la barre (24) passant entre les éléments parallèles de l'attelage en trois points du tracteur.

7. Remorque à un essieu selon l'une des revendications 4 à 6,
caractérisée en ce que
les ouvertures (15) en forme de crochets sont décalées vers les roues tirées (5), plus loin que le raccordement des bras supérieurs (14).

8. Remorque à un essieu selon l'une des revendications 1 à 7,
caractérisée en ce que
les roues tirées (3), pivotantes autour d'axes horizontaux, peuvent être bloquées et la remorque comporte des roues d'appui supplémentaires pour soutenir la remorque.

9. Remorque à un essieu selon l'une des revendications 1 à 8,
caractérisée en ce que
le cadre de châssis (2) comporte une double entretoise, notamment relativement approchée, située sensiblement au niveau de l'entretoise verticale médiane.

10. Remorque à un essieu selon la revendication 3,
caractérisée en ce qu'
une machine aspirante (8), reliée à l'entraînement de la machine soufflante (11), est tenue sur un rail (7) qui s'étend sensiblement horizontalement et perpendiculairement à la direction de déplacement rectiligne de la remorque.

11. Remorque à un essieu selon la revendication 10,
caractérisée en ce que
le rail (7) a une forme de U pour la fixation de la machine aspirante (8), et dans ce rail se trouve la partie d'entraînement de la machine aspirante (8) et celle-ci au-torise, notamment de manière sélective, un montage à droite ou à gauche de la machine aspirante (8).

12. Remorque à un essieu selon la revendication 9,
caractérisée en ce que
le cadre du châssis forme dans la direction de déplacement une structure sensiblement en T dont la traverse se trouve du côté des roues et qui s'étend latéralement de l'entretoise médiane et sert à fixer la paire de bras de guidage supérieurs ainsi que le châssis.
